(19) **Europäisches Patentamt**
**European Patent Office**
**Office européen des brevets**

(11) **EP 4 597 031 A1**

(12) **EUROPEAN PATENT APPLICATION**
published in accordance with Art. 153(4) EPC

(43) Date of publication:
06.08.2025 Bulletin 2025/32

(21) Application number: 23871367.1

(22) Date of filing: 07.07.2023

(51) International Patent Classification (IPC):
$G01C\ 3/06^{(2006.01)}$     $G02B\ 7/28^{(2021.01)}$
$G02B\ 7/34^{(2021.01)}$     $G02B\ 13/00^{(2006.01)}$
$G02B\ 13/18^{(2006.01)}$     $H04N\ 23/54^{(2023.01)}$
$H04N\ 23/55^{(2023.01)}$     $H04N\ 23/67^{(2023.01)}$

(52) Cooperative Patent Classification (CPC):
G06T 7/571; G01C 3/06; G01C 3/08; G01C 3/085;
G01C 3/14; G02B 7/28; G02B 7/34; G02B 13/00;
G02B 13/18; H04N 23/54; H04N 23/55;
H04N 23/67; B60R 1/22; G06T 2207/30252

(86) International application number:
PCT/JP2023/025221

(87) International publication number:
WO 2024/070123 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.09.2022 JP 2022153939

(71) Applicant: CANON KABUSHIKI KAISHA
Tokyo 146-8501 (JP)

(72) Inventors:
• KADOWAKI Ryota
Tokyo 146-8501 (JP)
• KAJIYAMA Kazuhiko
Tokyo 146-8501 (JP)

(74) Representative: TBK
Bavariaring 4-6
80336 München (DE)

(54) **RANGING DEVICE, ONBOARD SYSTEM, AND MOBILE DEVICE**

(57) [PROBLEMS] To provide a small and highly accurate distance measuring apparatus

[SOLUTION MEANS]

A distance measuring apparatus (1) includes an optical system (101) in which a focal length in a peripheral area distant from an optical axis is shorter than a focal length in a central area including the optical axis, an image sensor (102) including a plurality of pixels configured to receive an image of an object formed by the optical system, and an acquiring unit (103) configured to acquire distance information on the object from a parallax image acquired by the image sensor based on light beams from two different pupil positions in the optical system. A parallax direction of the parallax image is a direction including a component in a direction orthogonal to an installation surface of the distance measuring apparatus.

FIG. 1

**Description**

FIELD OF ART

The present invention relates to an optical apparatus, an on-board system, and a movable apparatus.

BACKGROUND ART

So-called stereoscopic distance measuring cameras have conventionally been known, in which distance information is acquired using the parallax of images obtained by a plurality of cameras. Patent Document 1 discloses a measurement apparatus configured to measure a distance between vehicles using a parallax image in a vertical direction obtained by vertically arranging two cameras. Patent Document 2 discloses an image pickup apparatus configured to set a parallax direction to each of the horizontal, vertical, and diagonal directions.

PRIOR ART DOCUMENT

PATENT DOCUMENTS

Patent Document 1: Japanese Patent No. 3456843
Patent Document 2: Japanese Patent No. 6981410

SUMMARY OF THE INVENTION

PROBLEMS TO BE SOLVED BY THE INVENTION

The measurement apparatus disclosed in Patent Document 1 is to space two cameras so as to obtain a parallax amount, and thus the size of the measurement apparatus increases. In the image pickup apparatus disclosed in Patent Document 2, the parallax direction can be selected, but in using an optical system called a foveal lens that increases a focal length near the central angle of view while expanding the peripheral angle of view, the focal length at the peripheral angle of view reduces, and thus the distance measuring accuracy deteriorates.
Accordingly, it is a purpose of the present invention to provide a small and highly accurate distance measuring apparatus.

MEANS TO SOLVE THE PROBLEM

A distance measuring apparatus according to one aspect of the present invention includes an optical system in which a focal length in a peripheral area distant from an optical axis is shorter than a focal length in a central area including the optical axis, an image sensor including a plurality of pixels configured to receive an image of an object formed by the optical system, and an acquiring unit configured to acquire distance information on the object from a parallax image acquired by the image sensor based on light beams from two different pupil positions in the optical system. A parallax direction of the parallax image is a direction including a component in a direction orthogonal to an installation surface of the distance measuring apparatus.
Other objects and features of the present invention will be described in the following embodiments.

EFFECT OF THE INVENTION

The present invention can provide a small and highly accurate distance measuring apparatus.

BRIEF DESCRIPTION OF THE DRAWINGS

FIG. 1 explains a distance measuring apparatus according to each example.
FIG. 2 explains an image sensor according to Examples 1 and 3.
FIG. 3 illustrates how light beams are guided to the pixels on the image sensor according to each example.
FIG. 4 explains a relationship between the distance measuring accuracy and a focal length according to each example.

FIG. 5 is a sectional view of an optical system according to Example 1.

FIG. 6 illustrates a relationship between an angle of view and a focal length of the optical system according to Example 1.

FIG. 7 illustrates a relationship between an angle of view and a focal length ratio of the optical system according to each example.

FIG. 8 illustrates a relationship between an angle of view and a focal length change of the optical system according to each example.

FIG. 9 explains a movable body mounted with a distance measuring apparatus according to Example 2.

FIG. 10 is a sectional view of an optical system according to Example 2.

FIG. 11 explains an image sensor according to Example 2.

FIG. 12 illustrates a relationship between an angle of view and an image height of the optical system according to each example.

FIG. 13 explains an installation method of a distance measuring apparatus according to Example 3.

FIG. 14 is a sectional view of an optical system according to Example 3.

FIG. 15 is a schematic diagram of a movable apparatus according to each example and illustrates an optical characteristic of the optical system.

FIG. 16 is a block diagram illustrating a configuration example of an on-board system according to each example.

## EMBODIMENTS FOR PRACTICING THE INVENTION

A detailed description will now be given of embodiments according to the present invention will be described with reference to the drawings.

## (EXAMPLE 1)

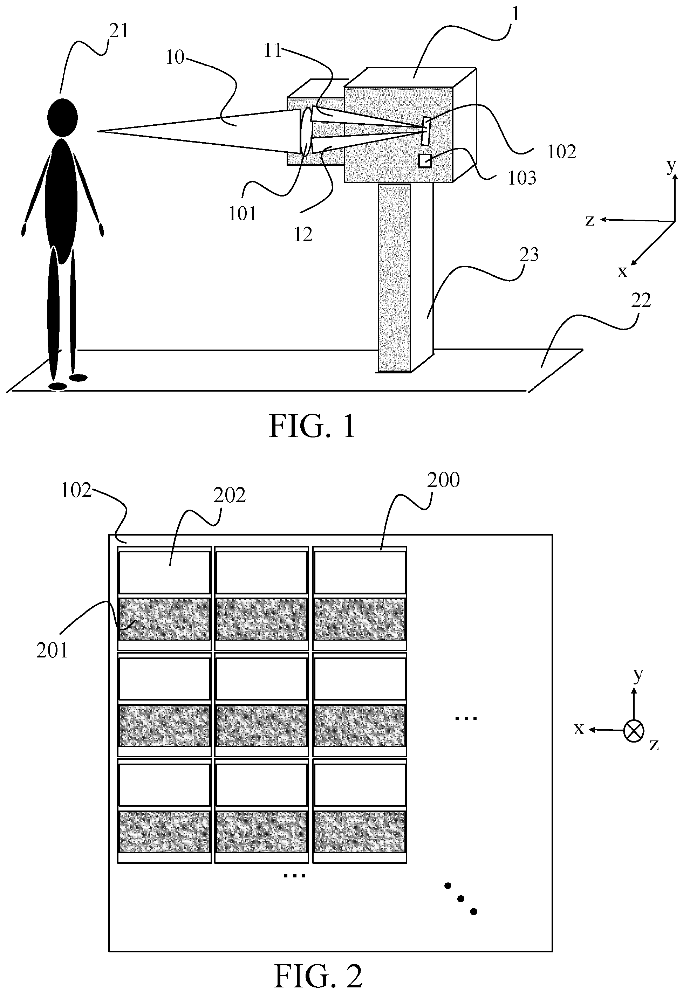

Referring now to FIG. 1, a description will be given of a distance measuring apparatus (image pickup apparatus) 1 according to Example 1 of the present invention. FIG. 1 explains the distance measuring apparatus 1. The distance measuring apparatus 1 includes an optical system (imaging optical system) 101, an image sensor 102, and an acquiring unit 103. The distance measuring apparatus 1 is fixed to the ground (installation surface) 22 using a fixing member 23, and is installed in a horizontal direction (z direction) relative to the ground 22 (zx plane). The distance measuring apparatus 1 acquires a light beam 10 from an object 21. The image sensor 102 can individually acquire light beams 11 and 12 from two different pupil positions in the optical system 101. The direction in which the image sensor 102 splits the light beams 11 and 12 is a direction including a component in a direction (y direction) orthogonal to the ground 22. Here, the direction including the component in the direction orthogonal to the ground 22 is $80 \leq \theta 1 \leq 100$, where $\theta 1$ (degrees) is an angle relative to the ground 22. This conditional expression is preferably $85 \leq \theta 1 \leq 95$, and more preferably $\theta 1 = 90$.

In the image sensor 102, the image based on the light beam 11 and the image based on the light beam 12 generate parallax in the direction orthogonal to the ground 22 (y direction) according to the object distance. The parallax means that a direction (angle) in which the object is viewed differs according to the position of the observation point, and the parallax direction means a direction in which parallax occurs.

Referring now to FIG. 2, a description will be given of the image sensor 102 according to this example. FIG. 2 explains the image sensor 102, illustrating the planar arrangement on the image sensor 102. The image sensor 102 receives an image of the object formed by the optical system 101, and includes a pixel 201 configured to detect light corresponding to the light beam 11, and a pixel 202 configured to detect light corresponding to the light beam 12 different from the light beam 11. Each pixel 200 includes a pair of the pixels 201 and 202. As illustrated in FIG. 2, the image sensor 102 has a plurality of pixels 200 that are two-dimensionally arranged on the xy plane, and can acquire two two-dimensional images having parallax in the parallax direction (y direction) according to the object distance. A similar image sensor 102 can be used for Example 3 described later.

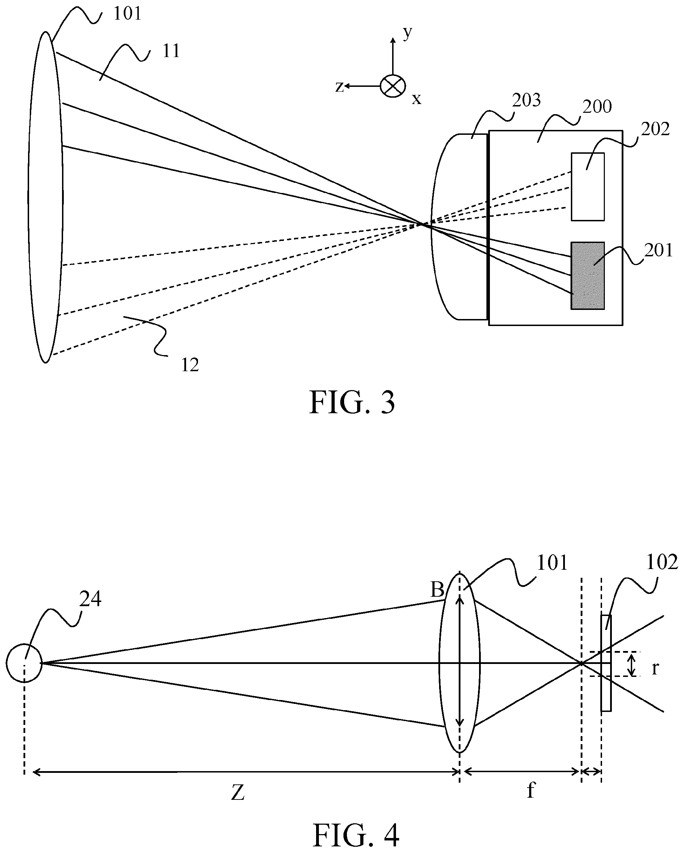

Referring now to FIG. 3, a description will be given of a relationship between the light beams 11 and 12 and the pixels 201 and 202 in the image sensor 102. FIG. 3 illustrates how the light beams 11 and 12 are guided to the pixels 201 and 202. FIG. 3 illustrates one of the plurality of pixels 200 arranged two-dimensionally on the xy plane as a representative. The pixels 202 and 203 are in a conjugate relationship with the two pupil positions in the optical system 101 by a microlens 203, and the light beams 11 and 12 are guided to the corresponding pixels 201 and 202, respectively. The acquiring unit 103 acquires (calculates) distance information to the object 21 based on a parallax amount of the images acquired by the pixels 201 and 202. The configuration illustrated in FIGs. 1 to 3 defines the pupil division direction relative to the ground 22, and distance measurement is performed.

Referring now to FIG. 4, a description will be given of a relationship between the distance measuring accuracy and a focal length of the optical system 101. FIG. 4 explains the relationship between the distance measuring accuracy and the focal length. A distance from an object 24 to the optical system 101 is Z, the focal length of the optical system 101 (an imaging point of an object at infinity) is f, a parallax amount in the image sensor 102 is r, and a shift amount of the pupil position in the optical system 101 is B. In this case, the relationship $Z \approx B \times f/r$ holds. In a case where the change amount of distance $\Delta Z$ and the parallax amount at that time are represented by $\Delta r$, the distance measuring accuracy can be expressed as $\Delta Z \approx \Delta r \times Z^2/(B \times f)$. Therefore, in order to improve the distance measuring accuracy, the focal length f of the optical system 101 is to increase.

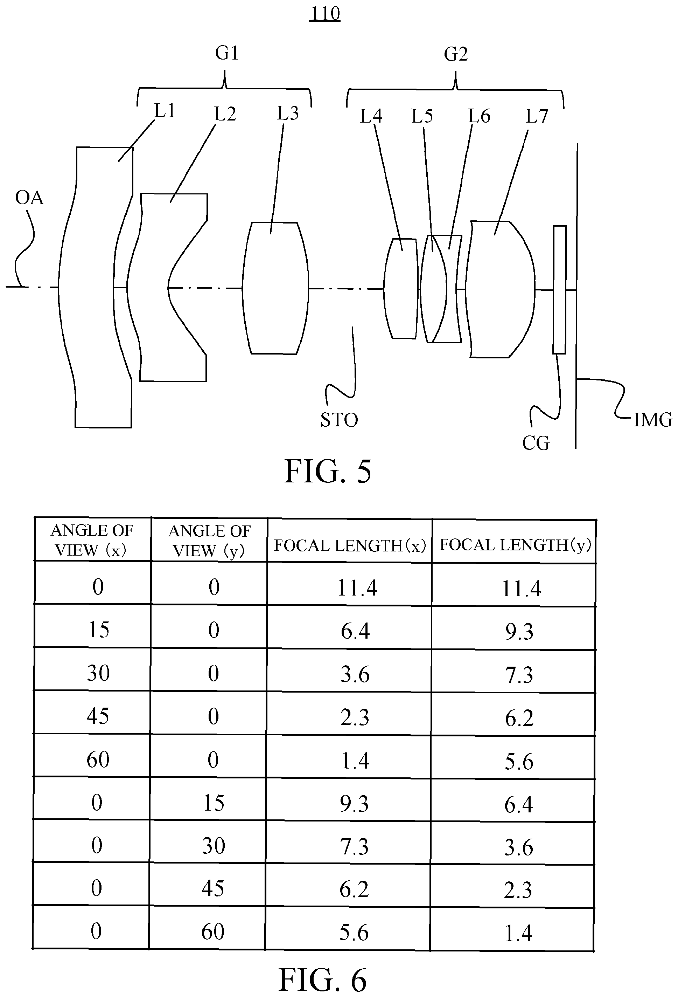

Referring now to FIG. 5, the optical system 110 according to this example will be described. The optical system 110 is used as the optical system 101 of the distance measuring apparatus 1. The optical system 110 includes, in order from the object side to the image side, a first group G1, an aperture stop (diaphragm) STO, and a second group G2. That is, the optical system 110 includes the aperture stop STO, the first group G1 disposed on the object side of the aperture stop STO, and the second group G2 disposed on the image side of the aperture stop STO. The first group G1 includes lenses L1, L2, and L3 arranged in this order from the object side to the image side. The lens L1 is a concave meniscus lens that has a convex surface toward the object side and has an inflection point. The second group G2 includes lenses L4, L5, L6, and L7 arranged in this order from the object side to the image side. CG is an optical block, and IMG is an image plane. In the optical system 110, a central focal length is 11.4 mm, an overall angle of view is 120°, and Fno (F-number) is 1.8.

The optical system 110 is a foveal lens that increases the focal length in a central area (near the center of the angle of view) including the optical axis OA while expanding a peripheral area distant from the optical axis OA (the focal length in the peripheral area is shorter than the focal length in the central area). Therefore, the distance measuring accuracy in the central area can be improved.

Referring now to FIG. 6, a description will be given of a relationship between an angle of view and a focal length of the optical system 110. FIG. 6 illustrates a relationship between the angle of view and focal length of the optical system 110, and a focal length change is discretely illustrated in the x and y directions. Now consider the x direction, which is horizontal to the ground 22. Then, for example, in a case where the angle of view (x) is 60 degrees and the angle of view (y) is 0 degrees, the focal length in the x direction is 1.4 mm while the focal length in the y direction is 5.6 mm. For this angle of view, the focal length in the y direction is four times as long. Conversely, in a case where the angle of view (x) is 0 degrees and the angle of view (y) is 60 degrees, the focal length in the x direction is 5.6 mm while the focal length in the y direction is 1.4. For this angle of view, the focal length in the x direction is longer. In other words, the focal length direction utilizing parallax is to be determined based on the angle of view that is to be emphasized.

For example, in the distance measuring apparatus 1 installed on the ground 22, the distance measuring accuracy in the horizontal direction is preferably improved, where there are more objects to be addressed, such as people, than that in the vertical direction, where most of the objects are on the ground or sky. Thus, in order to improve the distance measuring accuracy in the x direction, which is the horizontal direction, the parallax direction to be used by the distance measuring apparatus 1 is preferably set to the y direction, which is the vertical direction.

Now assume that f_dist is a focal length of the optical system 110 in the y direction, which is a direction (azimuth) (parallax direction) in which parallax is acquired, and f_per is a focal length of the optical system 110 in the x direction, which is the direction orthogonal to the parallax direction. Then, the following conditional expression (1) is preferably satisfied:

$$\text{f\_dist/f\_per} > 2.0 \qquad\qquad (1)$$

Conditional expression (1) is a conditional expression for increasing the focal length near the center of the angle of view while expanding the peripheral angle of view, thereby improving the distance measuring accuracy in the horizontal direction. As the value of f_dist/f_per increases, the focal length for distance measurement increases, and this is preferable because the distance measuring accuracy in the horizontal direction can be improved. It is not preferable that the value becomes lower than the lower limit of conditional expression (1) because the focal length near the center of the angle of view reduces, or the peripheral angle of view reduces. Since the left side of conditional expression (1) is 4 at the maximum horizontal angle of view, the optical system 110 according to this example satisfies conditional expression (1) and the value is large.

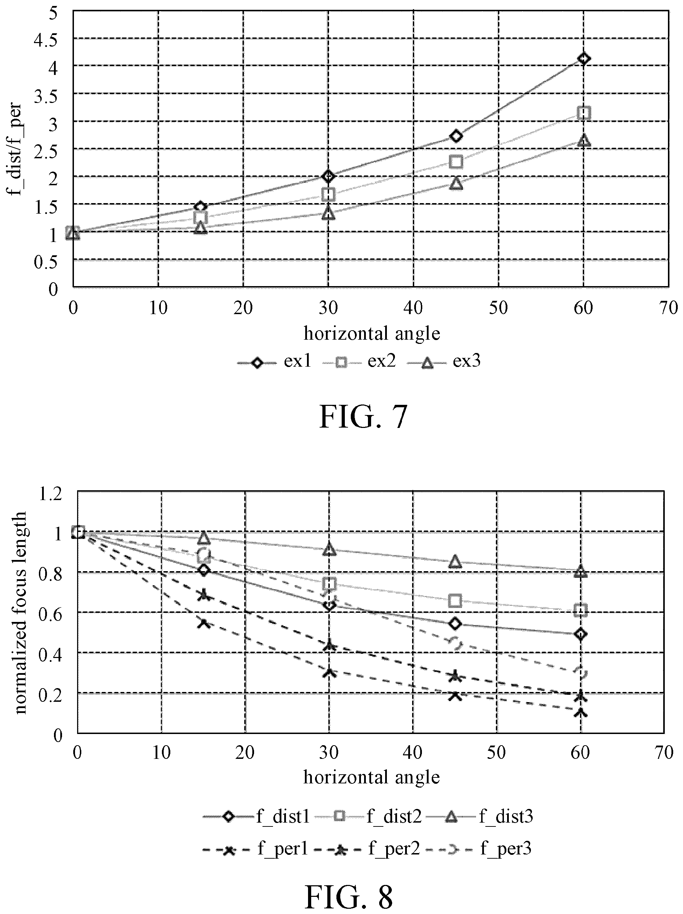

Referring now to FIG. 7, a description will be given of the left side (focal length ratio) of conditional expression (1) in numerical value 1 of the optical system 110 according to this example and numerical examples 2 and 3 of optical systems 120 and 130 according to Examples 2 and 3 described later. FIG. 7 illustrates a relationship between the angle of view and the focal length ratio of the optical systems 110, 120, and 130 according to respective examples, with the legend ex1 for Example 1, ex2 for Example 2, and ex3 for Example 3. In FIG. 7, the horizontal axis indicates the horizontal angle of view (degrees), and the vertical axis indicates the focal length ratio f_dist/f_per (the left side of conditional expression (1)). In each example, from the center of the angle of view to the off-axis position, the focal length of the direction in which parallax is obtained becomes larger than the focal length of the direction orthogonal to the above direction, and the relationship of conditional expression (1) is satisfied at the maximum horizontal angle of view.

In each example, the numerical range of conditional expression (1) is more preferably set as in conditional expression (1a) below:

$$f\_dist/f\_per > 2.2 \qquad (1a)$$

In each example, the numerical range of conditional expression (1) is most preferably set as in conditional expression (1b) below:

$$f\_dist/f\_per > 2.4 \qquad (1b)$$

In each example, assume that f_dist_max is a focal length of the optical system at the maximum angle of view in the direction orthogonal to the parallax direction (maximum horizontal angle of view) of the focal length f_dist of the optical system in the parallax direction, and f_AX is a focal length of the optical system at the central angle of view. Then, the following conditional expression (2) is preferably satisfied.

$$0.40 < f\_dist\_max/f\_AX < 0.90 \qquad (2)$$

Conditional expression (2) is a conditional expression for improving the distance measuring performance over the entire screen (entire angle of view). It is not preferable that the value becomes higher than the upper limit of conditional expression (2) because the distance measuring performance at the center of the angle of view decreases. On the other hand, it is not preferable that the value becomes lower than the lower limit of conditional expression (2) because the distance measuring performance in the peripheral area decreases. Since the value of conditional expression (2) is 0.50, the optical system 110 satisfies conditional expression (2).

Referring now to FIG. 8, a description will be given of a focal length change in a case where it is normalized by the focal length f_AX at the central angle of view in each of numerical examples 1 to 3. FIG. 8 illustrates a relationship between the angle of view of the optical system and the focal length change according to each example. In FIG. 8, the focal lengths of the optical systems according to Examples 1 to 3 in the parallax direction are illustrated as f_dist1, f_dist2, and f_dist3, respectively, and the focal lengths of the optical systems in the direction orthogonal to the parallax direction are illustrated as f_per1, f_per2, and f_per3, respectively. In FIG. 8, a horizontal axis represents a horizontal angle of view (degrees), and a vertical axis illustrates a normalized focal length. The numerical value on the vertical axis at the maximum angle of view corresponds to conditional expression (2). As illustrated in FIG. 8, f_per1 to f_per3 are less than 0.4 at the maximum angle of view, but the focal lengths in the parallax direction f_dist1 to f_dist3 are 0.4 or more. Thereby, a decrease in the focal length for distance measurement can be suppressed at the peripheral angle of view, and the distance measuring accuracy can be improved.

In each example, the numerical range of conditional expression (2) is more preferably set as in conditional expression (2a) below:

$$0.44 < f\_dist\_max/f\_AX < 0.87 \qquad (2a)$$

In each example, the numerical range of conditional expression (2) is most preferably set as in conditional expression (2b) below:

$$0.48 < f\_dist\_max/f\_AX < 0.84 \qquad (2b)$$

This example can provide a distance measuring apparatus that has a wide angle of view in the horizontal direction, and suppresses a decrease in the distance measuring accuracy.

(EXAMPLE 2)

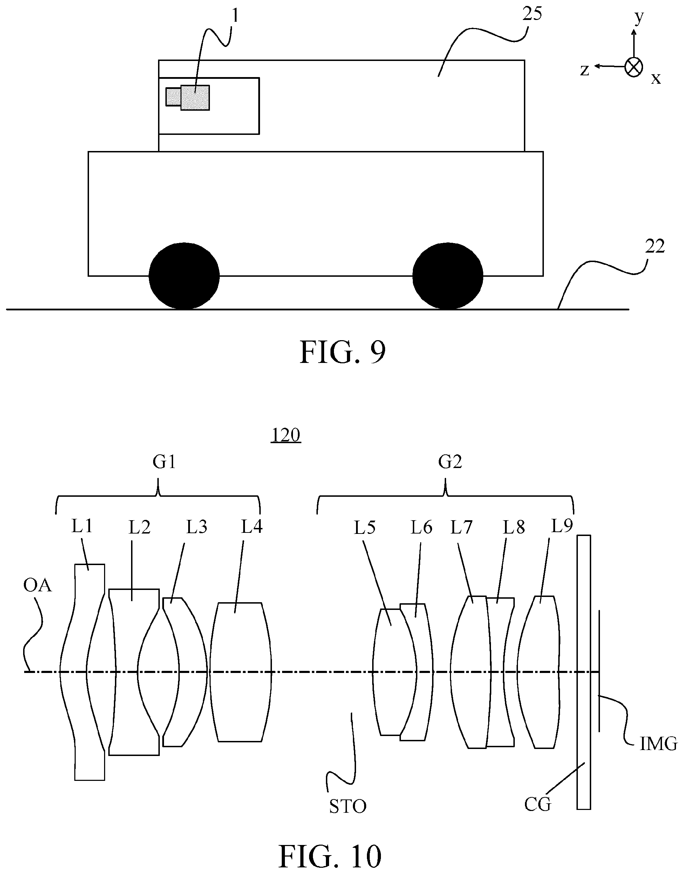

Referring now to FIG. 9, a description will be given of a movable body (movable apparatus) 25 in which the distance measuring apparatus 1 according to Example 2 of the present invention is installed. FIG. 9 explains the movable body 25 in which the distance measuring apparatus 1 is installed. The distance measuring apparatus 1 according to this example is installed facing a moving direction z of the movable body 25. The movable body 25 is movable in contact with the ground 22. This example utilizes the parallax direction of the distance measuring apparatus 1 fixed to the y direction orthogonal to the ground 22 for the movable body 25. As described above, the moving direction of the movable body 25 and the parallax direction of the distance measuring apparatus 1 are in a predetermined relationship (the parallax direction is orthogonal to the moving direction of the movable body 25). Thereby, this example can provide a distance measuring apparatus that has a wide angle of view in the horizontal direction x and suppresses a decrease in the distance measuring accuracy.

Referring now to FIG. 10, an optical system 120 according to this example will be described. The optical system 120 is used as the optical system 101 of the distance measuring apparatus 1. The optical system 120, similarly to the optical system 110 of Example 1, includes a first group G1, an aperture stop (diaphragm) STO, and a second group G2. The first group G1 includes lenses L1, L2, L3, and L4 arranged in this order from the object side to the image side. The lens L1 is a concave meniscus lens that has a convex surface toward the object side and has an inflection point. The second group G2 includes lenses L5, L6, L7, L8, and L9 arranged in this order from the object side to the image side. CG is an optical block, and IMG is an image plane. In the optical system 120, a central focal length is 9.0 mm, an overall angle of view is 120°, and Fno (F-number) is 1.8.

The optical system 120 is a foveated lens that increases the focal length of the central area (near the center of the angle of view) while expanding the peripheral area (the focal length of the peripheral area is shorter than that of the central area), so that the distance measuring accuracy in the central area can be improved. In addition, in the optical system 120, the left side of conditional expression (1) is 3.2 at the maximum horizontal angle of view. Using the optical system 120 that satisfies conditional expression (1) can provide a distance measuring apparatus that has a wide angle of view in the horizontal direction and suppresses a decrease in the distance measuring accuracy.

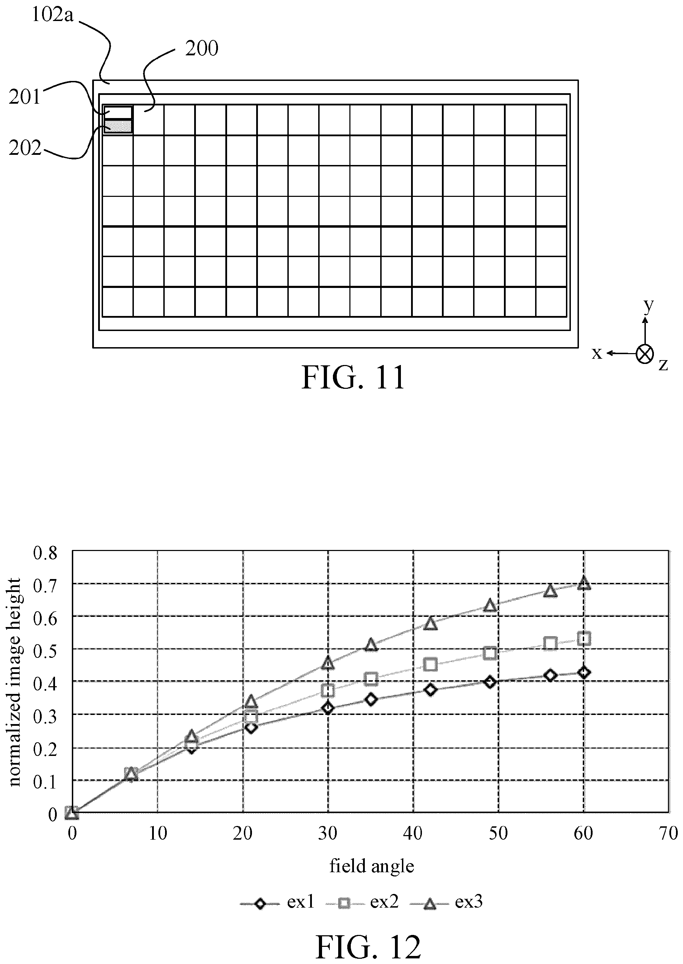

Referring now to FIG. 11, the configuration of the image sensor 102a according to this example will be described. FIG. 11 explains the image sensor 102a. The distance measuring apparatus according to this example includes the image sensor 102a instead of the image sensor 102 according to Example 1. The image sensor 102a is similar to the image sensor 102 described according to Example 1 with reference to FIG. 2 in that a plurality of pixels 200, each of which includes a pixel 201 and a pixel 202, are arranged on the xy plane. However, the image sensor 102a differs from the image sensor 102 in that the number of pixels in the parallax direction (y direction) is smaller than the number of pixels in the direction orthogonal to the parallax direction (x direction). In a case where the image sensor 102a is used together with the optical system 101, the direction with the smaller number of pixels is a direction with a smaller angle of view, and a direction including a component in a direction at the minimum angle of view of the image sensor 102a coincides with the parallax direction. The direction including the component in the direction at the minimum angle of view is $-10 \leq \theta2 \leq 10$, where $\theta2$ (degrees) is an angle relative to the parallax direction. This conditional expression is preferably $-5 \leq \theta2 \leq 5$, and more preferably $\theta2 = 0$. Using such a combination can suppress a decrease in the focal length in the parallax direction relative to the x direction side with a wide angle of view. As a result, a decrease in the distance measuring accuracy relative to the direction with a wider angle of view can be suppressed.

In a case where a foveal lens is used, the center of the screen (image) is enlarged. Therefore, in a case where the image sensor 102a with a small number of pixels in the y direction is used as in this example, unless the image height of the optical system is properly set, an angle of view in the vertical direction may not be sufficiently secured.

FIG. 12 illustrates a relationship between the angle of view and the image height in the optical system according to each example. In FIG. 12, Example 1 is illustrated with the legend ex1, Example 2 with the legend ex2, and Example 3 with the legend ex3. In FIG. 12, the horizontal axis indicates the angle of view (degrees), and the vertical axis indicates the normalized image height.

In each example, assume that h_HA is an image height at an angle of view that is half the maximum angle of view, and f_AX is a focal length at the central angle of view. Then, the following conditional expression (3) is preferably satisfied:

$$0.25 < h\_HA/f\_AX < 0.55 \qquad (3)$$

Conditional expression (3) is a conditional expression for properly setting the angle of view in the y direction in a case where the number of pixels in the y direction is small. It is not preferable that the value becomes higher than the upper limit of conditional expression (3) because the central area is enlarged too much, and the angle of view in the y direction becomes too narrow. On the other hand, it is not preferable that the value becomes lower than the lower limit of conditional expression (3) because the central area is not enlarged, and the distance measuring accuracy in the central area decreases.

In each example, the numerical range of conditional expression (3) is more preferably set as in conditional expression (3a) below:

$$0.27 < h\_HA/f\_AX < 0.52 \qquad\qquad (3a)$$

In each example, the numerical range of conditional expression (3) is most preferably set as in conditional expression (3b) below:

$$0.29 < h\_HA/f\_AX < 0.49 \qquad\qquad (3b)$$

This example can provide a distance measuring apparatus that has a wide horizontal angle of view and suppresses a decrease in the distance measuring accuracy.

(EXAMPLE 3)

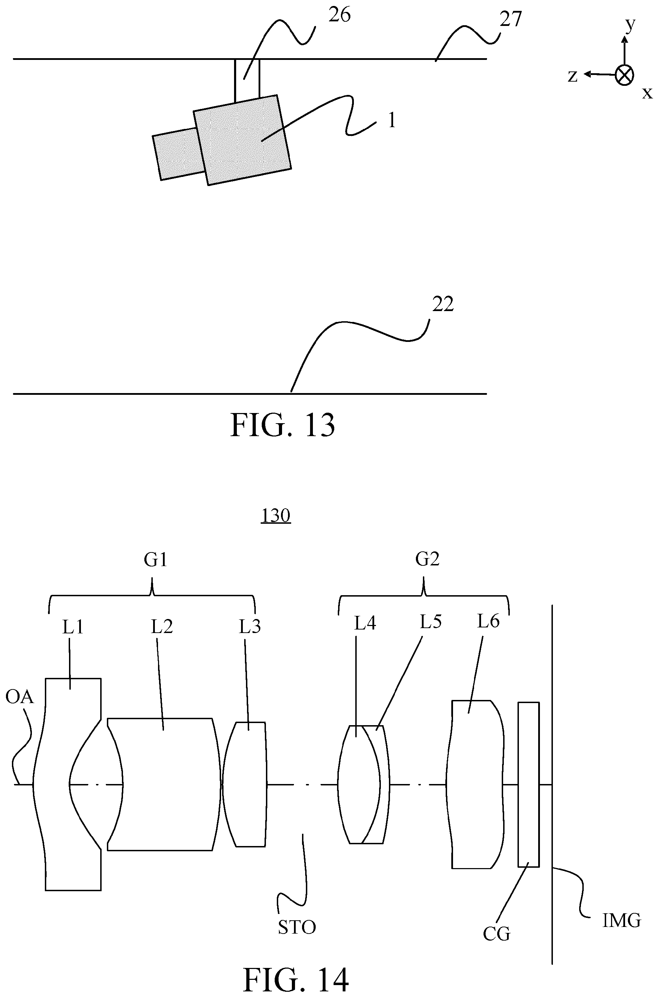

Referring now to FIG. 13, a description will be given of an indoor installation method of the distance measuring apparatus 1 according to Example 3 of the present invention.

FIG. 13 explains the installation method of the distance measuring apparatus 1 according to this example. In this example, the distance measuring apparatus 1 is fixed to a ceiling 27 via a fixing unit 26. At this time, as illustrated in FIG. 13, in order to improve the distance measuring accuracy in the acquired image in the direction of the ground 22, which is a direction of interest, the distance measuring apparatus 1 is tilted relative to the zy plane. The vertical direction in the acquired image is restricted by the ground 22 and the ceiling 27, so that the angle of view is not wide. In the horizontal direction x, in preparation for a wider angle of view, the parallax direction is set to the y direction side of the zy plane so that the distance measuring accuracy does not decrease. As described above, even in monitoring a fixed point where the distance measuring apparatus 1 is tilted and installed, distance measurement can be performed while a decrease in the distance measuring accuracy in the required direction can be suppressed.

Referring now to FIG. 14, the optical system 130 according to this example will be described. The optical system 130 is used as the optical system 101 in the distance measuring apparatus 1. The optical system 130 includes a first group G1, an aperture stop (diaphragm) STO, and a second group G2, similarly to the optical system 110 according to Example 1. The first group G1 includes lenses L1, L2, and L3 arranged in this order from the object side to the image side. Lens L1 is a concave meniscus lens that has a convex surface toward the object side and has an inflection point. The second group G2 includes lenses L4, L5, and L6 arranged in this order from the object side to the image side. CG is an optical block, and IMG is an image plane. In the optical system 120, a central focal length is 5.5 mm, an overall angle of view is 120°, and Fno (F-number) is 1.8.

The optical system 130 is a foveated lens that expands the peripheral area (the focal length of the peripheral area is shorter than that of the central area) while increasing the focal length of the central area (near the center of the angle of view), thereby improving the distance measuring accuracy in the central area. In the optical system 130, the left side of conditional expression (1) is 2.7 at the maximum horizontal angle of view. Using an optical system 130 that satisfies conditional expression (1) can provide a distance measuring apparatus that has a wide angle of view in the horizontal direction and suppresses a decrease in the distance measuring accuracy.

Numerical examples 1 to 3 corresponding to Examples 1 to 3 will be illustrated below. In each numerical example, a surface number is an order of each optical surface when counted from the object surface. r [mm] represents a radius of curvature of an i-th optical surface, and d [mm] represents a distance (distance on the optical axis) between i-th and (i+1)-th surfaces. Nd represents a refractive index of a medium between i-th and (i+1)-th surfaces for the d-line (wavelength 587.6 nm), and vd represents an Abbe number of the medium based on the d-line. The Abbe number vd is defined by the following equation where nF, nd, and nC are refractive indices for the F-line, d-line, and C-line, respectively:

$$vd = (nd\text{-}1)/(nF\text{-}nC)$$

In each numerical example, an asterisk (*) added to a surface number means that the surface has an aspheric shape. "E±P" in each numerical value means "$\times 10^{\pm P}$". The shape of each aspheric surface is expressed by the following equation:

[Numeral 1]

$$z = \frac{ch^2}{1 + \sqrt{1-(1+k)c^2h^2}} + Ah^4 + Bh^6 + Ch^8 + Dh^{10} + Eh^{12} + Fh^{14} + Gh^{16} + \cdots$$

Here, z denotes a displacement amount from a surface vertex in the optical axis direction, h denotes the height from the optical axis OA in the direction orthogonal to the optical axis direction, c denotes the curvature (the inverse of the radius of curvature r), and k denotes a conic coefficient. A, B, C, D, E, F, G, ... are aspheric coefficients for the fourth order, sixth order, eighth order, tenth order, twelfth order, fourteenth order, sixteenth order, etc., respectively.

(NUMERICAL EXAMPLE 1)

SURFACE DATA

| Surface No. | r | d | Nd | vd |
|---|---|---|---|---|
| 1* | 22.97 | 4.80 | 1.536 | 56.0 |
| 2* | 206.08 | 1.18 | | |
| 3* | 8.59 | 3.55 | 1.583 | 59.4 |
| 4* | 3.07 | 6.44 | | |
| 5 | 19.99 | 5.76 | 1.589 | 61.2 |
| 6 | -16.24 | 1.30 | | |
| 7 | ∞ | 2.50 | | |
| 8 (stop) | ∞ | 2.50 | | |
| 9 | ∞ | 0.21 | | |
| 10 | 12.14 | 3.00 | 1.694 | 53.2 |
| 11 | -41.94 | 0.20 | | |
| 12 | 17.94 | 2.29 | 1.595 | 67.7 |
| 13 | -9.27 | 0.81 | 2.001 | 29.1 |
| 14 | 23.10 | 0.82 | | |
| 15* | 16.53 | 6.00 | 1.536 | 56.0 |
| 16* | -26.36 | 1.60 | | |
| 17 | ∞ | 1.08 | 1.517 | 64.2 |
| 18 | ∞ | 0.96 | | |

ASPHERIC COEFFICIENTS

| Surface No. | K | A | B | C |
|---|---|---|---|---|
| 1 | -4.960E+00 | 1.801E-04 | -1.515E-06 | -3.938E-08 |
| 2 | 0.000E+00 | 1.289E-03 | -2.155E-05 | 9.639E-08 |
| 3 | 0.000E+00 | -3.050E-04 | -2.410E-05 | 6.440E-08 |
| 4 | -8.501E-01 | -3.599E-03 | 1.011E-05 | 1.139E-06 |
| 15 | 1.000E+00 | -4.403E-04 | 1.099E-05 | -1.188E-06 |
| 16 | 0.000E+00 | -4.024E-03 | 2.001E-04 | -6.527E-06 |

| Surface No. | D | E |
|---|---|---|
| 1 | 4.738E-10 | -1.428E-12 |
| 2 | -6.271E-10 | 1.269E-11 |

(continued)

| Surface No. | D | E |
|---|---|---|
| 3 | 5.467E-09 | -5.508E-11 |
| 4 | -3.006E-08 | 2.187E-10 |
| 15 | 4.888E-08 | -7.735E-10 |
| 16 | 1.232E-07 | -1.024E-09 |

(NUMERICAL EXAMPLE 2)

SURFACE DATA

| Surface No. | r | d | Nd | vd |
|---|---|---|---|---|
| 1* | 7.60 | 2.10 | 1.583 | 59.5 |
| 2* | 8.22 | 2.35 | | |
| 3* | -24.34 | 1.73 | 1.583 | 59.5 |
| 4* | 7.04 | 3.32 | | |
| 5 | -10.71 | 2.23 | 1.618 | 63.3 |
| 6 | -9.71 | 0.22 | | |
| 7 | 22.81 | 4.92 | 1.618 | 63.3 |
| 8 | -18.98 | 6.38 | | |
| 9 (stop) | ∞ | 1.68 | | |
| 10 | 19.55 | 3.51 | 1.618 | 63.3 |
| 11 | -10.35 | 1.30 | 1.855 | 24.8 |
| 12 | -22.37 | 1.39 | | |
| 13 | 13.57 | 3.23 | 1.699 | 51.1 |
| 14 | -45.83 | 1.00 | 1.855 | 24.8 |
| 15 | 17.07 | 1.08 | | |
| 16* | 12.09 | 3.32 | 1.583 | 59.5 |
| 17* | 20.82 | 1.45 | | |
| 18 | ∞ | 1.1 | 1.517 | 64.167 |
| 19 | ∞ | 0.7 | | |

ASPHERIC DATA

| Surface No. | K | A | B | C |
|---|---|---|---|---|
| 1 | -6.000E+00 | 5.230E-04 | -4.119E-05 | 4.630E-07 |
| 2 | -1.000E+00 | -1.264E-03 | 3.611E-05 | -1.078E-06 |
| 3 | 0.000E+00 | 1.123E-03 | -3.712E-05 | -2.177E-07 |
| 4 | 0.000E+00 | 7.190E-04 | -9.167E-05 | 1.009E-06 |
| 16 | 0.00E+00 | -0.0004455 | 5.0206E-05 | -2.985E-06 |
| 17 | 0 | -0.0034616 | 2.32E-04 | -1.09E-05 |

| Surface No. | D | E | F |
|---|---|---|---|
| 1 | 5.778E-09 | -1.442E-10 | 7.738E-13 |
| 2 | 1.202E-08 | 1.968E-10 | -3.352E-12 |
| 3 | 3.167E-08 | -6.330E-10 | 4.0282E-12 |
| 4 | 6.942E-08 | -2.866E-09 | 3.2196E-11 |

(continued)

| Surface No. | D | E | F |
|---|---|---|---|
| 16 | 8.9981E-08 | -1.409E-09 | 8.7264E-12 |
| 17 | 3.02E-07 | -4.44E-09 | 2.6047E-11 |

(NUMERICAL EXAMPLE 3)

SURFACE DATA

| Surface No. | r | d | Nd | vd |
|---|---|---|---|---|
| 1* | 5.65 | 1.92 | 1.583 | 59.5 |
| 2* | 2.57 | 2.84 | | |
| 3 | -6.40 | 5.19 | 2.003 | 19.3 |
| 4 | -13.71 | 0.10 | | |
| 5* | 7.87 | 2.35 | 1.772 | 46.3 |
| 6* | -43.99 | 1.90 | | |
| 7 (stop) | ∞ | 1.85 | | |
| 8 | 7.75 | 2.26 | 1.497 | 81.5 |
| 9 | -5.46 | 0.50 | 1.968 | 22.8 |
| 10 | -13.73 | 3.00 | | |
| 11* | 10.62 | 3.00 | 1.583 | 59.4 |
| 12* | 17.29 | 0.83 | | |
| 13 | ∞ | 1.10 | 1.517 | 64.167 |
| 14 | ∞ | 0.70 | | |

ASPHERIC DATA

| Surface No. | K | A | B | C |
|---|---|---|---|---|
| 1 | -1.966E+00 | -2.891E-03 | -6.291E-05 | 1.039E-05 |
| 2 | -1.161E+00 | -4.778E-03 | -3.573E-05 | 1.881E-05 |
| 3 | 0.000E+00 | -7.815E-06 | -1.381E-05 | 2.457E-06 |
| 4 | 0.000E+00 | 3.412E-04 | -3.565E-06 | 2.424E-07 |
| 15 | -1.047E+00 | -1.102E-03 | -2.041E-05 | -3.135E-07 |
| 16 | -6.118E+01 | -1.323E-03 | -6.599E-05 | -2.173E-06 |

| Surface No. | D | E | F | G |
|---|---|---|---|---|
| 1 | -4.241E-07 | 8.233E-09 | -6.391E-11 | 0.000E+00 |
| 2 | -1.131E-07 | -7.591E-08 | 2.954E-09 | 0.000E+00 |
| 3 | -2.975E-07 | 1.554E-08 | -3.57E-10 | 0.000E+00 |
| 4 | -1.133E-07 | 6.911E-09 | -1.952E-10 | 0.000E+00 |
| 15 | -1.493E-07 | -4.125E-09 | 1.0523E-09 | -3.306E-11 |
| 16 | -9.771E-08 | 2.957E-08 | -1.165E-09 | 1.2062E-11 |

Table 1 summarizes values for each conditional expression in each of Examples 1 to 3.

TABLE 1

|  | Ex. 1 | Ex. 2 | Ex, 3 |
|---|---|---|---|
| f_dist (maximum horizontal angle of view) | 5.64 | 5.51 | 4.45 |
| f_per (maximum horizontal angle of view) | 1.36 | 1.75 | 1.67 |
| (Conditional expression (1)) f_dist/f_per (maximum horizontal angle of view) | 4.14 | 3.16 | 2.67 |
| f_dist_max | 5.64 | 5.51 | 4.45 |
| f_AX | 11.40 | 9.00 | 5.48 |
| (Conditional expression (2)) f_dist_max/f_AX | 0.50 | 0.61 | 0.81 |
| h HA | 3.65 | 3.36 | 2.51 |
| (Conditional expression (3)) h_HA/f_AX | 0.32 | 0.37 | 0.46 |

ON-BOARD SYSTEM

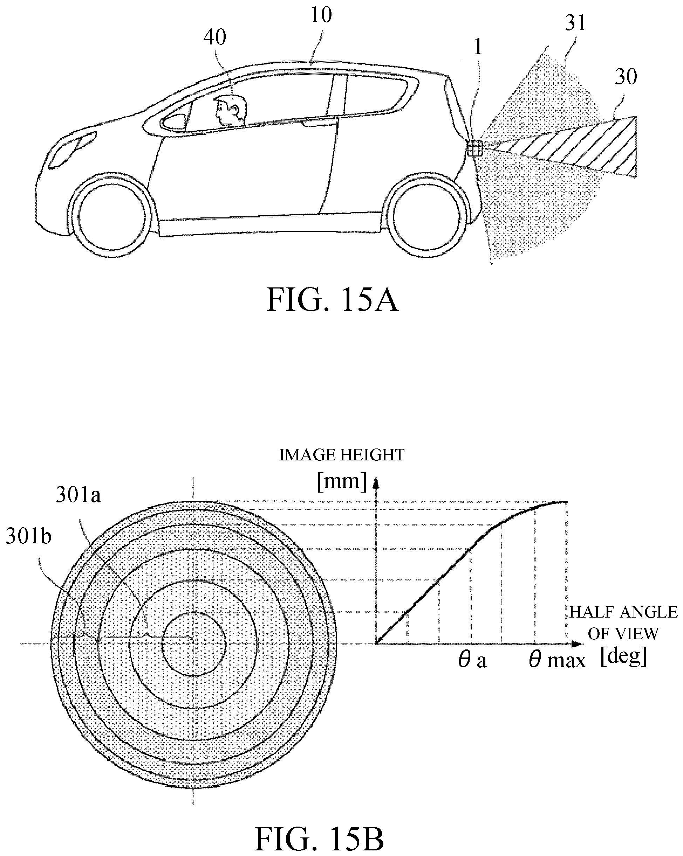

FIG. 15(A) is a schematic diagram of a movable apparatus 10 and a distance measuring apparatus (image pickup apparatus, on-board camera) 1 held by it. In FIG. 15(A), the movable apparatus 10 is an automobile (vehicle). The movable apparatus 10 includes an unillustrated on-board (in-vehicle) system (driving support apparatus) for supporting a user (driver, passenger, etc.) 40 of the movable apparatus 10 using an image acquired by the distance measuring apparatus 1. In this example, the distance measuring apparatus 1 is installed so as to image the rear of the movable apparatus 10, but the distance measuring apparatus 1 may be installed so as to image the front or side of the movable apparatus 10. In addition, two or more distance measuring apparatuses 1 may be installed at two or more locations on the movable apparatus 10.

The distance measuring apparatus 1 includes the optical system 101 and the image sensor 102 (102a) according to each example. The optical system 101 is an optical system (foveal lens, different angle-of-view lens) in which the imaging magnification is different between a first angle of view (first field of view) 30 and a second angle of view (second field of view) 31 larger than the first angle of view 30. An imaging surface (light receiving surface) of the image sensor 102 includes a first area for imaging an object included in the first angle of view 30 and a second area for imaging an object included in the second angle of view 31. At this time, the number of pixels per unit angle of view in the first area is larger than the number of pixels per unit angle of view in the second area excluding the first area. In other words, the resolution at the first angle of view (first area) is higher than the resolution at the second angle of view (second area) in the distance measuring apparatus 1.

The optical characteristic of the optical system 101 will be described in detail below. A left diagram in FIG. 15(B) illustrates a half angle of view θ [degrees] on the imaging surface of the image sensor 102 as a contour line at an image height y [mm]. A right diagram in FIG. 15(B) is a graph illustrating a relationship between each half angle of view θ and image height y (projection characteristic of optical system 101) in the first quadrant of the left diagram.

As illustrated in FIG. 15(B), optical system 101 is configured so that projection characteristic y(θ) differs between an angle of view less than a predetermined half angle of view θa and an angle of view equal to or greater than the half angle of view θa. Therefore, an increase in image height y per unit of half angle of view θ (resolution) also differs for each angle of view. The local resolution of optical system 101 is expressed as a differential value $dy(θ)/dθ$ of the projection characteristic y(θ) relative to the half angle of view θ. The left diagram in FIG. 15(B) illustrates that the longer a distance is between the contour lines of the image height y for each half angle of view θ, the higher the resolution is. The right diagram in FIG. 15(B) illustrates that the larger the slope of the graph of the projection characteristic y(θ) is, the higher the resolution is.

In the left diagram of FIG. 15(B), the first area 301a, which is the central area, corresponds to an angle of view less than the half angle of view θa, and the second area 301b, which is the peripheral area, corresponds to the angle of view equal to or greater than the half angle of view θa. The angle of view less than the half angle of view θa corresponds to the first angle of view 30 in FIG. 15(A), and a combined angle of view of the angle of view less than the half angle of view θa and the angle of view equal to or greater than the half angle of view θa corresponds to the second angle of view 31 in FIG. 15(A). As described above, the first area 301a is an area of high resolution and low distortion, and the second area 301b is an area of low resolution and high distortion.

A value θa/θmax of a ratio of the half angle of view θa to the maximum half angle of view θmax is preferably 0.15 or more and 0.35 or less, and more preferably 0.16 or more and 0.25 or less. For example, in this example, since the maximum half angle of view θmax = 90°, the value of the half angle of view θa is preferably 13.5° or more and 31.5° or less, and more preferably 14.4° or more and 22.5° or less.

The optical system 101 is configured so that the projection characteristic y(θ) in the first area 301a is different from f×θ (equidistant projection method) and is also different from the projection characteristic in the second area 301b. **In** this case, the projection characteristic y(θ) of the optical system 101 may satisfy the following conditional expression (4):

$$1.0 < f \times \sin(\theta max)/y(\theta max) \leq 1.9 \qquad (4)$$

Satisfying conditional expression (4) can achieve a wide angle of view of the optical system 101 by reducing the resolution in the second area 301b. The resolution in the first area 301a can be higher than that in the central area of a typical fisheye lens that employs the orthogonal projection method (y(θ)=f×sinθ). It is not preferable that the value becomes lower than the lower limit of conditional expression (4) because the resolution in the first area 301a becomes lower than that of a fisheye lens using the orthogonal projection method, the maximum image height becomes larger, or the size of the optical system increases. It is not preferable that the value becomes higher than the upper limit of conditional expression (4) because the resolution in the first area 301a becomes too high, it becomes difficult to achieve a wide angle of view equivalent to that of a fisheye lens using the orthogonal projection method, or good optical performance cannot be maintained.

The following conditional expression (4a) is preferably satisfied and conditional expression (4a) is more preferably satisfied:

$$1.0 < f \times \sin(\theta max)/y(\theta max) \leq 1.7 \qquad (4a)$$

$$1.0 < f \times \sin(\theta max)/y(\theta max) \leq 1.4 \qquad (4b)$$

As described above, the distortion of the optical system 101 is small and the resolution is high in the first area 301a, so an image higher-definition than that can be obtained in the second area 301b can be obtained. Therefore, good visibility can be obtained by setting the first area 301a (first angle of view 30) to be the area of interest of the user 40. For example, as illustrated in FIG. 15A, in a case where the distance measuring apparatus 1 is placed at the rear of the movable apparatus 10, a natural sense of perspective can be obtained when the user 40 looks at a rear vehicle, etc., by displaying an image corresponding to the first angle of view 30 on an electronic rearview mirror. On the other hand, the second area 301b (second angle of view 31) corresponds to a wide angle of view including the first angle of view 30. Therefore, for example, in a case where the movable apparatus 10 is backing up, an image corresponding to the second angle of view 31 can be displayed on the in-vehicle display unit to assist the user 40 in driving.

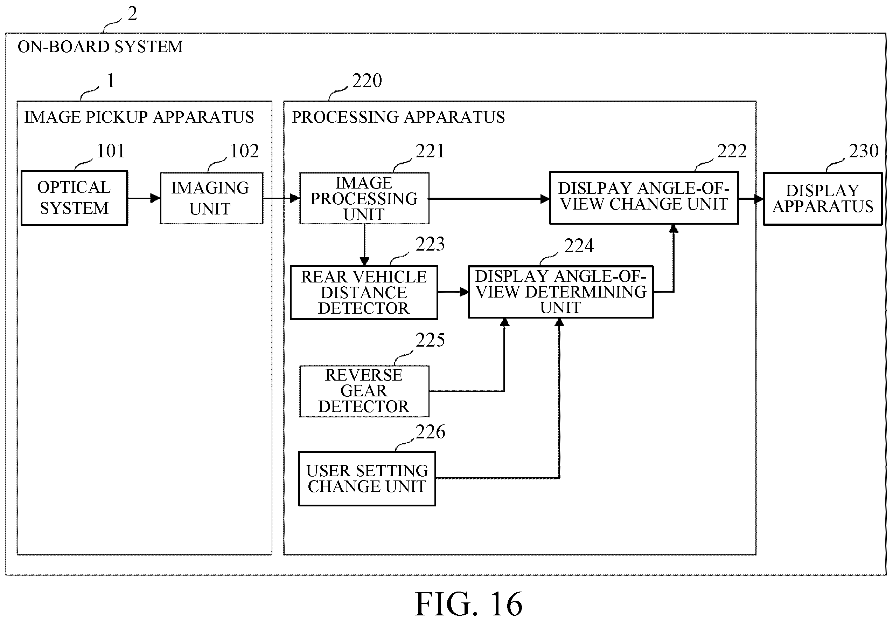

FIG. 16 is a functional block diagram for explaining a configuration example of the on-board system 2 according to this example. The on-board system 2 is a system for displaying to the user 40 an image obtained by the distance measuring apparatus 1 installed behind the movable apparatus 10. The on-board system 2 includes the distance measuring apparatus 1, a processing apparatus 220, and a display apparatus (display unit) 230. The distance measuring apparatus 1 includes the optical system 101 and the image sensor 102 as described above. The image sensor 102 includes a photoelectric conversion element such as a CCD sensor or a CMOS sensor, generates imaging data by photoelectrically converting an optical image formed by the optical system 101, and outputs the imaging data to the processing apparatus 220.

The processing apparatus 220 includes an image processing unit 221, a display angle-of-view determining unit 224 (determining unit), a user setting change unit 226 (first change unit), a rear vehicle distance detector 223 (first detector), a reverse (back) gear detector 225 (second detector), and a display angle-of-view change unit 222 (second change unit). The processing apparatus 220 is a computer such as a central processing unit (CPU) microcomputer, and functions as a control unit configured to control the operation of each component based on a computer program. At least one component in the processing apparatus 220 may be realized by hardware such as an Application Specific Integrated Circuit (ASIC) or a Programmable Logic Array (PLA).

The image processing unit 221 generates image data by performing image processing such as Wide Dynamic Range (WDR) correction, gamma correction, Look Up Table (LUT) processing, and distortion correction for the imaging data acquired from the image sensor 102. The distortion correction is performed for at least the imaging data corresponding to the second area 301b. Thereby, the user 40 can easily visually recognize the image displayed on the display apparatus 230, and improve the detection rate of the rear vehicle in the rear vehicle distance detector 223. The distortion correction may not be performed for the imaging data corresponding to the first area 301a. The image processing unit 221 outputs the image data generated by performing the image processing described above to the display angle change unit 222 and the rear vehicle distance detector 223.

The rear vehicle distance detector 223 corresponds to the acquiring unit according to each of the above examples, and acquires information on a distance to a rear vehicle included in the image data corresponding to the range of the second angle of view 31 that does not include the first angle of view 30, using the image data output from the image processing unit 221. In addition to the distance calculated utilizing the parallax, the rear vehicle distance detector 223 may detect the rear vehicle based on the image data corresponding to the second area 301b of the image data, and calculate a distance to his vehicle from the change in the position or size of the detected rear vehicle, and the like. The rear vehicle distance detector 223 outputs the calculated distance information to the display angle-of-view determining unit 224.

The rear vehicle distance detector 223 may determine the vehicle type of the rear vehicle based on data on characteristic information such as the shape and color of each vehicle type output as a result of machine learning (deep learning) based on images of a large number of vehicles. At this time, the rear vehicle distance detector 223 may output information on the vehicle type of the rear vehicle to the display angle-of-view determining unit 224. The reverse gear detector 225 detects whether the transmission of the movable apparatus 10 (his vehicle) is shifted into reverse, and outputs the detection result to the display angle-of-view determining unit 224.

The display angle-of-view determining unit 224 determines whether the angle of view (display angle of view) of the image to be displayed on the display apparatus 230 is to be the first angle of view 30 or the second angle of view 31 based on the output from at least one of the rear vehicle distance detector 223 and the reverse gear detector 225. Then, the display angle-of-view determining unit 224 provides an output to the display angle-of-view change unit 222 according to the determination result. For example, the display angle-of-view determining unit 224 can determine that the display angle of view is to be the second angle of view 31 in a case where the distance value in the distance information is equal to or less than a predetermined threshold value (e.g., 3 m), and can determine that the display angle of view is to be the first angle of view 30 in a case where the distance value is greater than the threshold value. Alternatively, the display angle-of-view determining unit 224 can determine that the display angle of view is to be the second angle of view 31 in a case where the reverse gear detector 225 notifies the user that the transmission of the movable apparatus 10 is shifted into reverse. The display angle-of-view determining unit 224 can determine that the display angle of view is to be the first angle of view 30 in a case where the vehicle is not shifted into reverse.

The display angle-of-view determining unit 224 can determine that the display angle of view is to be the second angle of view 31 regardless of the result of the rear vehicle distance detector 223 in a case where the transmission of the movable apparatus 10 is shifted into reverse. The display angle-of-view determining unit 224 can determine that the display angle of view is to be determined according to the detection result of the rear vehicle distance detector 223 in a case where the transmission of the movable apparatus 10 is not shifted into reverse. The display angle-of-view determining unit 224 may change the determination criterion for changing the angle of view according to the vehicle type of the movable apparatus 10 by receiving the vehicle type information from the rear vehicle distance detector 223. For example, in a case where the movable apparatus 10 is a large vehicle such as a truck, the braking distance is longer than that of a regular vehicle, so the above threshold value may be set longer than that of a regular vehicle (for example, 10 m).

The user setting change unit 226 allows the user 40 to change the determination criterion for determining whether or not the display angle of view is to be changed to the second angle of view 31 by the display angle-of-view determining unit 224. The determination criterion set (changed) by the user 40 is input from the user setting change unit 226 to the display angle-of-view determining unit 224.

The display angle-of-view change unit 222 generates a display image to be displayed on the display apparatus 230 according to the determination result by the display angle-of-view determining unit 224. For example, in a case where it is determined that the display angle of view is to be the first angle of view 30, the display angle change unit 222 cuts out a rectangular narrow-angle image (first image) from the image data corresponding to the first angle of view 30 and outputs it to the display apparatus 230. In a case where a rear vehicle that satisfies a predetermined condition is present in the image data corresponding to the second angle of view 31, the display angle change unit 222 outputs an image (second image) including the rear vehicle to the display apparatus 230. The second image may include an image corresponding to the first area 301a. The display angle-of-view change unit 222 functions as a display control unit configured to perform display control to switch between a first display state in which the display apparatus 230 displays the first image and a second display state in which the display apparatus 230 displays the second image.

The display angle-of-view change unit 222 cuts out an image by storing the image data output from the image processing unit 221 in a storage unit (memory) such as a RAM, and reading out the image to be cut out of it. The area in the image data that corresponds to the first image is a rectangular area in the first angle of view 30 that corresponds to the first area 301a. The area in the image data that corresponds to the second image is a rectangular area including the rear vehicle in the second angle of view 31 that corresponds to the second area 301b.

The display apparatus 230 has a display unit such as a liquid crystal display or an organic EL display, and displays the display image output from the display angle-of-view change unit 222. For example, the display apparatus 230 has a first display unit as an electronic rearview mirror disposed above the windshield (front glass) of the movable apparatus 10, and a second display unit as an operation panel (monitor) disposed below the windshield of the movable apparatus 10. In this configuration, the first image and the second image generated from the image data described above can be displayed on the first display unit and the second display unit, respectively. The first display unit may include, for example, a half-mirror to be used as a mirror while it is not used as a display unit. The second display unit may also serve as a display unit for a navigation system or an audio system, for example.

The movable apparatus 10 is not limited to a vehicle such as an automobile, but may be a movable body such as a ship, an aircraft, an industrial robot, or a drone. In addition, the on-board system 2 according to this example is used to display an image to the user 40, but may also be used for driving assistance such as cruise control (including an adaptive cruise control function) and automatic driving. Furthermore, the on-board system 2 is not limited to a movable apparatus and can be applied to various devices that use object recognition, such as an intelligent transport system (ITS).

The on-board system 2 may include a determining unit configured to determine the likelihood of collision with an object based on information on the distance to the object obtained by the distance measuring apparatus 1. A stereoscopic camera having two image sensors 102 may be used as the distance measuring apparatus 1. In this case, even without using an image-plane phase-difference sensor, image data can be simultaneously obtained by each of the synchronized imaging units, and processing similar to that described above can be performed by using the two image data. However, if a difference in imaging time between these imaging units is known, the imaging units may not be synchronized.

Each example can provide a distance measuring apparatus that has a compact size and improved distance measuring accuracy in the horizontal direction, even if the distance measuring apparatus uses a foveal lens. Therefore, each example can provide a distance measuring apparatus, an on-board system, and a movable apparatus, each of which has a compact size and high accuracy.

Although preferred embodiments of the present invention have been described above, the present invention is not limited to these embodiments, and various modifications and changes are possible within the scope of the gist.

**Claims**

1. A distance measuring apparatus comprising:

   an optical system in which a focal length in a peripheral area distant from an optical axis is shorter than a focal length in a central area including the optical axis;
   an image sensor including a plurality of pixels configured to receive an image of an object formed by the optical system; and
   an acquiring unit configured to acquire distance information on the object from a parallax image acquired by the image sensor based on light beams from two different pupil positions in the optical system,
   **characterized in that** a parallax direction of the parallax image is a direction including a component in a direction orthogonal to an installation surface of the distance measuring apparatus.

2. A distance measuring apparatus comprising:

   an optical system in which a focal length in a peripheral area distant from an optical axis is shorter than a focal length in a central area including the optical axis;
   an image sensor including a plurality of pixels configured to receive an image of an object formed by the optical system; and
   an acquiring unit configured to acquire distance information on the object from a parallax image acquired by the image sensor based on light beams from two different pupil positions in the optical system,
   **characterized in that** a parallax direction of the parallax image is a direction including a component in a direction of a minimum angle of view of the image sensor.

3. A distance measuring apparatus to be mounted on a movable apparatus, the distance measuring apparatus comprising:

   an optical system in which a focal length in a peripheral area distant from an optical axis is shorter than a focal length in a central area including the optical axis;
   an image sensor including a plurality of pixels configured to receive an image of an object formed by the optical system; and
   an acquiring unit configured to acquire distance information on the object from a parallax image acquired by the image sensor based on light beams from two different pupil positions in the optical system,
   **characterized in that** a parallax direction of the parallax image is a direction including a component in a direction orthogonal to a moving direction of the movable apparatus.

4. The distance measuring apparatus according to any one of claims 1 to 3, **characterized in that** a focal length of the optical system in a horizontal direction to the installation surface is shorter than a focal length of the optical system in the direction including the component in the direction orthogonal to the installation surface.

5. The distance measuring apparatus according to any one of claims 1 to 4, **characterized in that** the following conditional expression is satisfied:

$$f\_dist/f\_per > 2.0$$

where f_dist is a focal length of the optical system in the parallax direction, and f_per is a focal length of the optical system in a direction orthogonal to the parallax direction.

6. The distance measuring apparatus according to any one of claims 1 to 5, **characterized in that** the following conditional expression is satisfied:

$$0.40 < f\_dist\_max/f\_AX < 0.90$$

where f_dist_max is a focal length of the optical system at a maximum angle of view in a direction orthogonal to the parallax direction of a focal length f_dist of the optical system in the parallax direction, and f_AX is a focal length of the optical system at a central angle of view.

7. The distance measuring apparatus according to any one of claims 1 to 6, **characterized in that** in the image sensor, the number of pixels in the parallax direction is smaller than the number of pixels in a direction including a component in a direction orthogonal to the parallax direction.

8. The distance measuring apparatus according to any one of claims 1 to 7, **characterized in that** the following conditional expression is satisfied:

$$0.25 < h\_HA/f\_AX < 0.55$$

where h_HA is an image height at an angle of view that is half a maximum angle of view of the optical system, and f_AX is a focal length of the optical system at a central angle of view.

9. The distance measuring apparatus according to any one of claims 1 to 8, **characterized in that** the optical system includes an aperture stop, a first group disposed on an object side of the aperture stop, and a second group disposed on an image side of the aperture stop, and
**characterized in that** the first group includes a concave meniscus lens having a convex surface toward the object side and an inflection point.

10. An on-board system comprising:

the distance measuring apparatus according to any one of claims 1 to 9; and
a display apparatus configured to display an image obtained based on an output of the distance measuring apparatus.

11. The on-board system according to claim 10, **characterized in that** the display apparatus includes:

a first display unit configured to display a first image corresponding to a first angle of view in the image, and
a second display unit configured to display a second image corresponding to a second angle of view including the first angle of view.

12. A movable apparatus comprising:

the distance measuring apparatus according to any one of claims 1 to 9,
**characterized in that** the movable apparatus is configured to move while holding the distance measuring apparatus.

FIG. 1

FIG. 2

FIG. 3

FIG. 4

110

G1 G2

L1 L2 L3 L4 L5 L6 L7

OA

STO

CG

IMG

## FIG. 5

| ANGLE OF VIEW (x) | ANGLE OF VIEW (y) | FOCAL LENGTH(x) | FOCAL LENGTH(y) |
|---|---|---|---|
| 0 | 0 | 11.4 | 11.4 |
| 15 | 0 | 6.4 | 9.3 |
| 30 | 0 | 3.6 | 7.3 |
| 45 | 0 | 2.3 | 6.2 |
| 60 | 0 | 1.4 | 5.6 |
| 0 | 15 | 9.3 | 6.4 |
| 0 | 30 | 7.3 | 3.6 |
| 0 | 45 | 6.2 | 2.3 |
| 0 | 60 | 5.6 | 1.4 |

## FIG. 6

FIG. 7

FIG. 8

FIG. 9

FIG. 10

FIG. 11

FIG. 12

26    27

y

z ← ⊗
    x

1

22

FIG. 13

130

G1    G2

L1    L2    L3    L4    L5    L6

OA

STO

CG    IMG

FIG. 14

FIG. 15A

FIG. 15B

FIG. 16

## INTERNATIONAL SEARCH REPORT

| International application No. |
|---|
| **PCT/JP2023/025221** |

| A. | CLASSIFICATION OF SUBJECT MATTER |
|---|---|

*G01C 3/06*(2006.01)i; *G02B 7/28*(2021.01)i; *G02B 7/34*(2021.01)i; *G02B 13/00*(2006.01)i; *G02B 13/18*(2006.01)i; *H04N 23/54*(2023.01)i; *H04N 23/55*(2023.01)i; *H04N 23/67*(2023.01)i
FI: G01C3/06 110V; G02B7/28 N; G02B7/34; G01C3/06 140; H04N23/67; H04N23/54; H04N23/55; G02B13/00; G02B13/18

According to International Patent Classification (IPC) or to both national classification and IPC

| B. | FIELDS SEARCHED |
|---|---|

Minimum documentation searched (classification system followed by classification symbols)

G01C3/06; G02B7/28; G02B7/34; G02B13/00; G02B13/18; H04N23/54; H04N23/55; H04N23/67

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2022-114766 A (CANON KK) 08 August 2022 (2022-08-08)<br>paragraphs [0001], [0005]-[0006], [0069], [0142], fig. 1 | 1-4, 7-12 |
| A | paragraphs [0001], [0005]-[0006], [0069], [0142], fig. 1 | 5-6 |
| Y | JP 2017-167126 A (CANON KK) 21 September 2017 (2017-09-21)<br>paragraphs [0040], [0042]-[0044], fig. 9-11 | 1-4, 7-12 |
| Y | JP 2019-28311 A (CANON KK) 21 February 2019 (2019-02-21)<br>fig. 1 | 2, 4, 7-12 |
| Y | JP 2015-203756 A (CANON KK) 16 November 2015 (2015-11-16)<br>fig. 1 | 2, 4, 7-12 |
| Y | JP 2020-150427 A (RICOH CO LTD) 17 September 2020 (2020-09-17)<br>paragraphs [0049], [0078], fig. 15 | 4, 10-11 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
|---|
| **PCT/JP2023/025221** |

### C. DOCUMENTS CONSIDERED TO BE RELEVANT

| Category* | Citation of document, with indication, where appropriate, of the relevant passages | Relevant to claim No. |
|---|---|---|
| Y | WO 2016/068095 A1 (HITACHI AUTOMOTIVE SYSTEMS LTD) 06 May 2016 (2016-05-06) <br> paragraph [0002] | 8 |
| A | JP 2006-276816 A (OLYMPUS CORP) 12 October 2006 (2006-10-12) <br> entire text, all drawings | 1-12 |

Form PCT/ISA/210 (second sheet) (January 2015)

# EP 4 597 031 A1

**INTERNATIONAL SEARCH REPORT**
Information on patent family members

International application No.

**PCT/JP2023/025221**

| Patent document cited in search report | | | Publication date (day/month/year) | Patent family member(s) | | | Publication date (day/month/year) |
|---|---|---|---|---|---|---|---|
| JP | 2022-114766 | A | 08 August 2022 | US | 2022/0236541 | A1 | |
| | | | | paragraphs [0001], [0005]-[0006], [0072], [0134], fig. 1 | | | |
| | | | | EP | 4036626 | A1 | |
| | | | | CN | 114815142 | A | |
| JP | 2017-167126 | A | 21 September 2017 | US | 2017/0261318 | A1 | |
| | | | | paragraphs [0057], [0059]-[0061], fig. 9-11 | | | |
| | | | | JP | 2022-1882 | A | |
| | | | | US | 2020/0278202 | A1 | |
| JP | 2019-28311 | A | 21 February 2019 | (Family: none) | | | |
| JP | 2015-203756 | A | 16 November 2015 | (Family: none) | | | |
| JP | 2020-150427 | A | 17 September 2020 | US | 2022/0070434 | A1 | |
| | | | | paragraphs [0090]-[0092], [0151], fig. 15 | | | |
| | | | | WO | 2020/184286 | A1 | |
| | | | | EP | 3938829 | A1 | |
| | | | | CN | 113574436 | A | |
| | | | | CA | 3124081 | A | |
| WO | 2016/068095 | A1 | 06 May 2016 | US | 2017/0314917 | A1 | |
| | | | | paragraph [0002] | | | |
| | | | | EP | 3214474 | A1 | |
| JP | 2006-276816 | A | 12 October 2006 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3456843 B

- JP 6981410 B